Europäisches Patentamt

European Patent Office

Office européen des brevets

(19)

(11) Veröffentlichungsnummer : **0 139 772**
**B1**

# (12) EUROPÄISCHE PATENTSCHRIFT

(45) Veröffentlichungstag der Patentschrift :
08.07.87

(21) Anmeldenummer : 83110120.9

(22) Anmeldetag : 11.10.83

(51) Int. Cl.⁴ : **A 47 J 27/08**

(54) **Dampfdruckkochtopf.**

(30) Priorität : 25.08.83 CH 4699/83

(43) Veröffentlichungstag der Anmeldung :
08.05.85 Patentblatt 85/19

(45) Bekanntmachung des Hinweises auf die Patenterteilung : 08.07.87 Patentblatt 87/28

(84) Benannte Vertragsstaaten :
AT BE CH DE FR GB IT LI LU NL SE

(56) Entgegenhaltungen :
EP-A- 0 108 203
DE-A- 2 534 709
DE-C- 896 409
US-A- 1 907 528

(73) Patentinhaber : AMC International Alfa Metalcraft Corporation AG
Buonaserstrasse 30
CH-6343 Rotkreuz (CH)

(72) Erfinder : **von der Becke, Reinhard**
**Obere Rebhalde 21**
**CH-6340 Baar (CH)**
Erfinder : **Schultz, Horst**
**Bergmannweg 2**
**D-6230 Frankfurt/M. 80 (DE)**

(74) Vertreter : **Keil, Rainer A., Dipl.-Phys. Dr. et al**
**Patentanwälte KEIL & SCHAAFHAUSEN Ammelburgs-**
**trasse 34**
**D-6000 Frankfurt am Main 1 (DE)**

# 0 139 772

## Beschreibung

Die Erfindung bezieht sich auf einen Dampfdruckkochtopf, im wesentlichen bestehend aus einem Untertopf und einer den Untertopf mittels ringförmigem Schließelement druckdicht verschließenden Deckeleinheit, wobei der Untertopf einen umlaufenden glatten, nach außen abgewinkelten Topfrand mit in Draufsicht kontinuierlicher, vorzugsweise kreisrunder, Außenkante aufweist und wobei die Deckeleinheit einen Unterdeckel und wenigstens ein einen in Schließstellung im wesentlichen geschlossenen Oberdeckel bildendes Schließelement aufweist, das gegenüber dem Unterdeckel und dem Untertopf in einer Ebene parallel zur Ebene des Topfrandes beweglich ist sowie einen oberen Randabschnitt für das Übergreifen eines äußeren Randbereiches des Unterdeckels und wenigstens eine sich etwa über seinen halben Außenumfang erstreckende, für das Untergreifen des Topfrandes in Verriegelungsstellung bestimmte untere Umbördelung aufweist.

Ein solcher Dampfdruckkochtopf ist aus der DE-A-25 34 709 bekannt. Bei diesem sind der Unterdeckel als auch der als zweiter geschlossener Deckel ausgebildete Schließring jeweils durchgehend etwa über den halben Umfang mit der den Topfrand untergreifenden Umbördelung derart versehen, daß durch gegenseitiges Verdrehen von Deckel und Schließring die Umbördelungen zur Deckung bringbar sind und der Deckel mit Schließring in dieser Stellung in seitlicher Richtung vom Topfrand abnehmbar sind. Hierbei muß also zum Aufsetzen und Abnehmen der Deckeleinheit eine Schiebebewegung ausgeführt werden. Zum Öffnen und zum Schließen des Dampfdruckkochtopfes ist es ferner erforderlich, den gesamten als zweiten geschlossenen Deckel ausgebildeten Schließring gegenüber dem Unterdeckel zu verdrehen.

Aufgabe der vorliegenden Erfindung ist es, einen Dampfdruckkochtopf der gattungsgemäßen Art so weiterzubilden, daß er einfacher in Konstruktion, zuverlässiger in der Funktion und leichter in der Handhabung ist.

Diese Aufgabe wird erfindungsgemäß dadurch gelöst, daß der Oberdeckel zwei Halbdeckel aufweist, daß jeder Halbdeckel um eine zur vertikalen geometrischen Topfmittelachse im wesentlichen parallelen Drehachse relativ zum Unterdeckel und zum Untertopf drehbar aufgenommen ist, daß die Drehachsen exzentrisch zur Topfmittelachse und bezüglich dieser diametral in einem mittig am Unterdeckel drehbar gelagerten Drehteil einander gegenüberliegen und daß jedem Halbdeckel die von seinem Flächenschwerpunkt in Schließrichtung weiter entfernt liegende Drehachse zugeordnet ist.

Hierdurch braucht zum Verschließen bzw. Öffnen der Deckeleinheit gegenüber dem Untertopf lediglich an dem Drehteil gedreht zu werden. Beim Öffnen führen die beiden Halbdeckel entsprechend ihrer exzentrischen Lagerung an dem Drehteil eine halbkreisförmige Bewegung, also überlagert etwa parallel zu ihrer gedachten Teilungslinie und senkrecht dazu aus, bis die Umbördelungen den Topfrand nicht mehr untergreifen. Die Deckeleinheit kann dann einfach nach oben abgenommen werden. Ebenso einfach setzt man zum Verschließen des Topfes die Deckeleinheit senkrecht von oben auf den Untertopf auf. Durch Verdrehen des Drehteiles in entgegengesetzter Richtung führen die beiden Halbdeckel zunächst eine halbkreisförmige Bewegung aus, bis sie sich wieder zu einem im wesentlichen vollständigen Oberdeckel durch Über- oder Aneinanderlegen ergänzen und die Umbördelungen den Topfrand praktisch vollständig umlaufend untergreifen. Die Bewegung der beiden Halbdeckel wird im wesentlichen bestimmt durch die exzentrische Lage der Drehachsen zu der Topfmittelachse. Beim Drehen des Drehteils um 180° vertauschen beispielsweise die Drehachsen ihre Position. Die Drehachse des jeweiligen Halbdeckels liegt dabei in Schließstellung jenseits der Topfmittelachse und in Öffnungsstellung diesseits der Topfmittelachse, so daß sich beim Verdrehen des Drehteiles um 180° aus der Schließstellung die beiden Halbdeckel auseinanderschieben und die unteren Umbördelungen den Topfrand freigeben. Die exzentrische Lage der Drehachsen kann aber auch so getroffen sein, daß bereits eine Drehung des Drehteils um weniger als 180° genügt, also beispielsweise um etwa nur 90°. Die Betätigung des Verschlußmechanismus ist äußerst einfach und leichtgängig. Es sind nur wenige einfache Teile zur Schaffung des erfindungsgemäßen Dampfdruckkochtopfes notwendig. Der Dampfdruckkochtopf hat in Verschlußstellung der Halbdeckel das Aussehen eines normalen Kochtopfes. Die von der Hausfrau « gefürchteten » technischen Teile des Betätigungsmechanismus sind unsichtbar. Die Deckeleinheit ist wie ein üblicher Topfdeckel von oben senkrecht auf den Untertopf aufzusetzen und umgekehrt wieder abzunehmen. Zum Verschließen braucht die Hausfrau dann lediglich den Drehteil um bis zu 180° zu verdrehen.

Aus der DE-A-896 409 ist es an einem Dampfdruckkochtopf an sich bekannt, einen Verschluß zwischen Deckel und Untertopf mittels radial verschieblicher, den Deckelrand und den Topfrand umgreifenden Klauen herzustellen. Der radialen Bewegung der Klauen dient eine am Gefäßdeckel drehbar gelagerte Rundkeilscheibe mit mehreren bogenförmigen Führungen, in die mit den frei liegenden Klauen verbundene Zapfen eingreifen. Bei dieser Lösung ist nachteilig, daß der Topfrand nur über einen verhältnismäßig geringen Umfangsbereich untergriffen wird. Für ein dichtes Verschließen unter hinreichender Klemmwirkung muß daher das Material von Topfrand, Deckelrand und Klauen sehr stark ausgebildet sein. Der nach Art eines Blendenverschlusses arbeitende Betätigungsmechanismus, der eine genaue Führung der Zapfen in den Führungen voraussetzt, kann bei der rauhen Behandlung leicht der Verschmutzung, Verklemmung oder sonstigen Beeinträchtigung unterliegen. Nachteilig ist auch das « technische Aussehen » des bekannten Dampfdrucktopfes.

Die beiden Halbdeckel können sich in Schließstellung, wie zuvor erwähnt, bereichsweise übergreifen. Von besonderem Vorteil ist es aber, wenn die beiden Halbdeckel im wesentlichen identisch sind und sich vorzugsweise in Schließstellung mit einander zugewandten Rändern aneinanderliegend zu einem im wesentlichen vollen Oberdeckel ergänzen. Die geschlossene Deckeleinheit bekommt dadurch eine weitgehend glatte Oberfläche.

Die Drehachsen können als gesonderte Bauteile drehbar in dem Drehteil gelagert oder von dem Drehteil gebildet sein.

In Weiterbildung des Erfindungsgedankens verlaufen die einander zugewandten Ränder der Halbdeckel axialsymmetrisch zueinander jeweils von einer Seite ihres Außenumfangs aus unter Berücksichtigung der exzentrischen Lage der zugeordneten Drehachse im wesentlichen radial, etwa von der Höhe der Drehachse an umschließen sie eine konkave Einbuchtung und dann eine die Drehachse aufnehmende konvexe Zunge und zuletzt verlaufen sie wieder im wesentlichen radial zur diametral gegenüberliegenden Seite ihres Außenumfangs. Hierdurch kann auf konstruktiv einfache Weise die Verschiebung der beiden Halbdeckel durch Drehen des Drehteils bei Identität der Halbdeckel erzielt werden.

Um in Schließstellung einen vollständig geschlossenen Oberdeckel zu bilden, greifen Einbuchtung und Zunge beim Aneinanderliegen der im wesentlichen radial verlaufenden Abschnitte der einander zugewandten Ränder der Halbdeckel formschlüssig ineinander.

Bei einer anderen bevorzugten Ausgestaltung des Erfindungsgedankens weist der Drehteil zwei exzentrisch zur Topfmittelachse liegende Kreisscheibenabschnitte auf, deren Mittelpunkte die Lage der geometrischen Mittelachsen der Drehachsen bestimmen, und jeder Kreisscheibenabschnitt ist in einer entsprechend kreisrunden Aussparung des ihm zugeordneten Halbdeckels drehbar aufgenommen.

Zweckmäßigerweise liegen die geometrischen Mittelachsen der Drehachsen sowohl in vollständiger Schließstellung als auch in vollständiger Öffnungsstellung der Halbdeckel im wesentlichen in derselben vertikalen Symmetrieebene. Hierdurch ist der Drehteil zum Öffnen und Schließen jeweils genau um 180° zu drehen, was auch durch entsprechende Markierungen angezeigt werden kann.

Ein weiteres erfinderisches Merkmal besteht darin, daß sich die unteren Umbördelungen der Halbdeckel, vorzugsweise von der die geometrischen Mittelachsen der Drehachsen aufnehmenden Symmetrieebene aus, in ihrer Breite zu den einander zugewandten Rändern der Halbdeckel allmählich verringern. Hierdurch reicht ein verhältnismäßig geringer Verschiebeweg aus, um die unteren Umbördelungen mit dem Topfrand in Eingriff oder außer Eingriff zu bringen.

Dieser Vorteil wird noch dadurch unterstützt, wenn der Verlauf der Innenkanten der unteren Umbördelungen der Halbdeckel der Kontur des zugeordneten Bereichs der Außenkante des Topfrandes entspricht.

Bei außen kreisrundem Topfrand ist es zweckmäßig, wenn die Innenkanten der unteren Umbördelungen der Halbdeckel auf einem Kreis verlaufen, dessen Radius dem Radius des Kreises entspricht, auf welchem die Außenkante des Topfrandes verläuft. In Schließstellung untergreifen die Umbördelungen dann den Topfrand etwa je sichelförmig bis nahezu 360°. In Öffnungsstellung liegen die Innenkanten der Umbördelungen gerade etwas außerhalb der Außenkante des Topfrandes, so daß die Deckeleinheit nach oben abgehoben werden kann.

Ein konstruktiv einfacher und in seiner Funktion zuverlässiger Schließmechanismus ist dann gegeben, wenn das Drehteil mittels eines Gewindefortsatzes durch eine mittige Deckelöffnung des Unterdeckels mit geringem Spiel drehbar hindurchragt und mittels einer auf dem Gewindefortsatz aufgeschraubten Gegenmutter drehbar an dem Unterdeckel gehalten ist.

Um die Drehbarkeit zu gewährleisten, kann der Gewindefortsatz und/oder die Deckelöffnung kreisrunden Querschnitt haben.

Zweckmäßigerweise ragt der Drehteil mit dem Gewindefortsatz auf der Innenseite des Unterdeckels hervor, so daß die Gegenmutter aufschraubbar ist.

Eine zuverlässige Funktion des Schließmechanismus wird gemäß einer weiteren Ausgestaltung des Erfindungsgedankens dadurch gesichert, daß der Drehteil sich mit einem zwischen Unterdeckel und Halbdeckel liegenden erweiterten Kragen auf der Oberseite des Unterdeckels abstützt.

Die Höhe des Kragens kann vorteilhafterweise der Breite des Spaltes zwischen Unterdeckel und Halbdeckel entsprechen, so daß die Halbdeckel auf dem Kragen bei ihrer Auswärts- und Einwärtsbewegung geführt werden.

Die Halbdeckel stützen sich dabei zweckmäßigerweise mit einem ebenen Mittelteil auf einer ebenen Oberseite des Kragens ab.

Zur einfachen Betätigung ist der Drehteil vorteilhafterweise mit einem oberhalb der Halbdeckel liegenden Deckelgriff drehfest verbunden. Dieser Deckelgriff dient damit nicht nur zur Betätigung des Schließmechanismus. Er dient auch zur Handhabung der Deckeleinheit insgesamt, wodurch ein gesonderter Deckelgriff entbehrlich ist.

Zwischen dem Unterdeckel und den Halbdeckeln kann bei einer vorteilhaften Ausgestaltung der Erfindung ein Führungskörper mit zwei axialsymmetrisch liegenden Führungsnuten angeordnet sein, in welche die Halbdeckel mit je einem Führungsstift eingreifen. Hierdurch wird gewährleistet, daß die Halbdeckel bei ihrer Öffnungs- und Schließbewegung keine undefinierten Bewegungswege ausführen.

Besonders zweckmäßig ist es, wenn die Führungsnuten im wesentlichen gerade, zueinander und zur Symmetrieebene parallel verlaufen, in welcher die geometrischen Mittelachsen der Drehachsen in ihrer Schließstellung liegen und wenn der Führungskörper um die Topfmittelachse drehbar angeordnet ist. Dann können die beiden Halbdeckel die aufgrund ihrer exzentrischen Lagerung bedingte Schiebebewegung ausführen.

Dabei umschließt vorteilhafterweise der Führungskörper den Drehteil ringförmig und hat dadurch selbst einen sicheren Sitz.

Die Höhe des Führungskörpers kann etwa der Breite des Spaltes zwischen Unterdeckel und Halbdeckel entsprechen so daß die Halbdeckel auch auf dem Führungskörper geführt werden.

Zur einfachen Verwirklichung des Erfindungsgedankens können die Drehachsen als in Bohrungen des Drehteiles aufgenommene Bolzen ausgebildet sein.

Gemäß einem weiteren Erfindungsgedanken ist wenigstens eine der beiden Drehachsen als Hohlachse ausgebildet welche eine Strömungsverbindung zwischen dem Topfinnenraum und einem in dem Deckelgriff angeordneten Manometer und/oder Thermometer herstellt.

Der Deckelgriff kann dabei eine Vertiefung für die Aufnahme eines Manometers und/oder Thermometers aufweisen.

Zur einfachen Zentrierung der Deckeleinheit auf dem Untertopf ist der Unterdeckel vorteilhafterweise als Zargendeckel ausgebildet. Im Bereich der Deckelauflage kann er dabei eine Umfangsnut für die Aufnahme eines Dichtungsringes haben.

Der Untertopf selbst hat dabei vorteilhafterweise im Übergangsbereich zwischen Wandung und auskragendem Topfrand eine Umfangsrille für das Eingreifen des in der Umfangsnut des Unterdeckels liegenden Dichtungsringes. Diese Umfangsrille dient auch als sogenannte Kondensrille.

Um zu vermeiden, daß der erfindungsgemäße Dampfdruckkochtopf geöffnet werden kann, während im Topfinnenraum noch ein Überdruck herrscht, ist gemäß einem weiteren Erfindungsgedanken in dem Unterdeckel eine Entlüftungs- und Druckentlastungseinrichtung angeordnet, deren vertikal beweglicher Ventilkörper bei in dem geschlossenen Topfinnenraum herrschenden Überdruck durch eine in dem zugeordneten Halbdeckel angeordnete Sicherungsöffnung ragt, dessen Querschnitt nur geringfügig größer als der Außenquerschnitt des Ventilkörpers ist. Auf diese Weise ist ein Verschieben wenigstens eines Halbdeckels gesperrt, solange noch Überdruck im Topfinnenraum herrscht. Der Öffnungsmechanismus ist so erst betätigbar, wenn der Ventilkörper bei vollständigem Druckabfall so weit abgesunken ist, daß er das Verschieben des einen Halbdeckels nicht mehr behindert.

Weitere Ziele, Vorteile und Anwendungsmöglichkeiten der vorliegenden Erfindung ergeben sich aus der nachfolgenden Beschreibung eines Ausführungsbeispieles anhand der Zeichnung.

Es zeigt :

Figur 1 einen Vertikalschnitt E-F gemäß Fig. 3 durch einen die Erfindung aufweisenden Dampfdruckkochtopf, bei welchem sich die Deckeleinheit in Schließstellung befindet,

Figur 2 einen Vertikalschnitt G-H gemäß Fig. 4 durch einen Dampfdruckkochtopf gemäß Fig. 1, bei welcher sich jedoch die Deckeleinheit in Öffnungsstellung aber auf den Untertopf aufgesetzt, befindet,

Figur 3 einen Horizontalschnitt A-B gemäß Fig. 1 durch einen Dampfdruckkochtopf gemäß Fig. 1, bei welchem sich die Deckeleinheit in Schließstellung befindet,

Figur 4 einen Horizontalschnitt C-D gemäß Fig. 2 durch einen-Dampfdruckkochtopf gemäß Fig. 1, bei welchem sich jedoch die Deckeleinheit in Öffnungsstellung, aber auf den Untertopf aufgesetzt, befindet, und

Figuren 5a bis 5b schematisch in Draufsicht auf die Deckeleinheit die Funktionsweise einer anderen Ausführungsform der Erfindung.

Der Dampfdruckkochtopf 1 besteht im wesentlichen aus einem Untertopf 2 und einer Deckeleinheit 3. Der Umtertopf 2 hat einen am oberen Ende einer Wandung 32 abgewinkelten umlaufenden, weitgehend ebenen Topfrand 4. Die Außenkante 5 des Topfrandes 4 ist etwas nach unten abgewinkelt. Im Übergangsbereich zwischen Wandung 32 und Topfrand 4 läuft eine Umfangsrille 33 um, in welche sich ein Dichtungsring 31 der Deckeleinheit 3 dichtend einlegen kann. Die Deckeleinheit 3 hat einen im wesentlichen geschlossenen Unterdeckel 6 und einen darüber angeordneten Oberdeckel 7. Der Unterdeckel 6 hat einen äußeren ebenen Randbereich 9, an welchen sich über einen vertikalen umlaufenden Schenkel 38 ein ebenfalls horizontal umlaufender ebener Schenkel 39 anschließt, mit welchem er den Topfrand 4 überkragt. Am inneren Ende des horizontalen Schenkels 39 schließt sich über eine außen umlaufende Umfangsnut 30 eine Zarge 37 an mit welcher der Unterdeckel 6 zentriert in den Untertopf 2 eingesetzt werden kann.

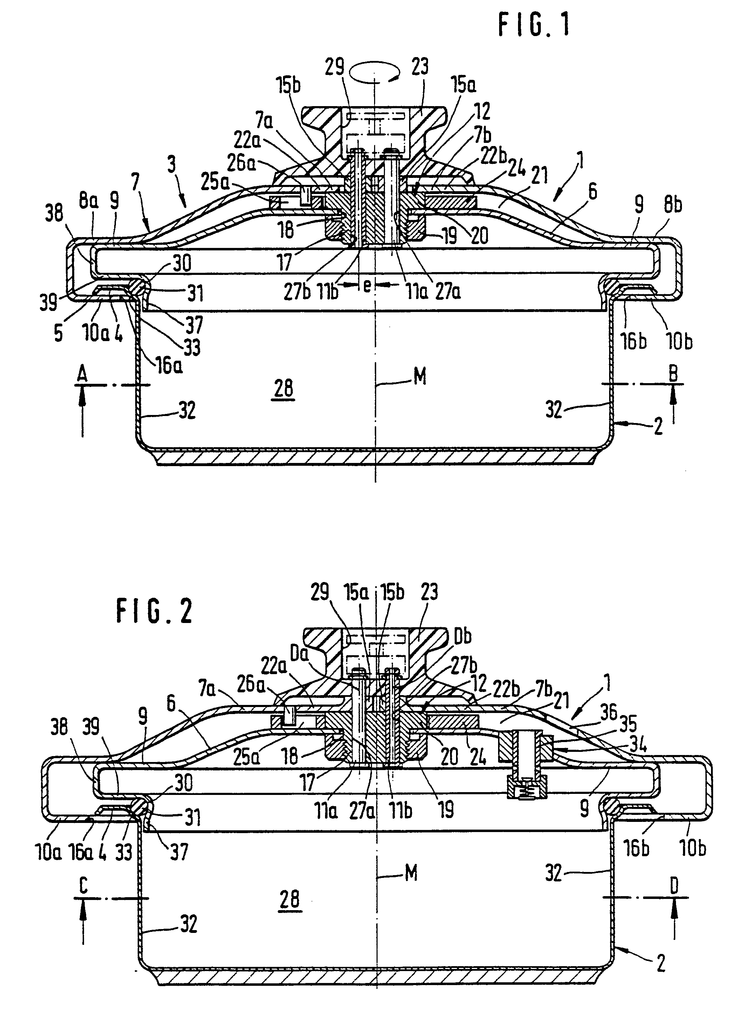

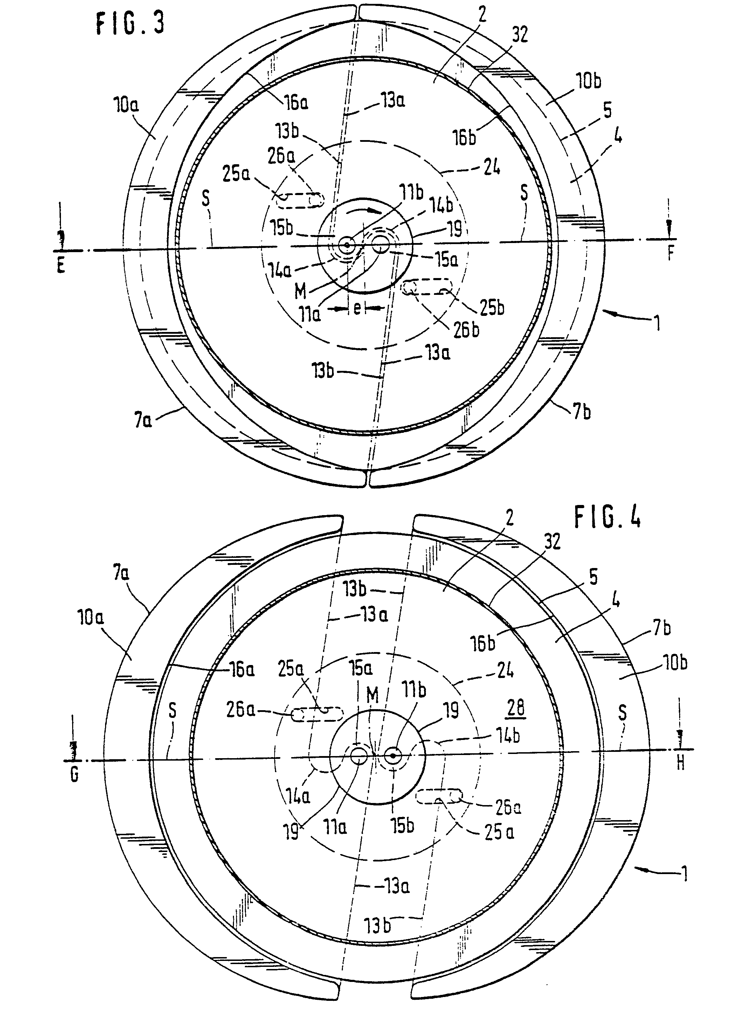

Von der Umfangsnut 30 ist ein als O-Ring oder Schnur ausgebildeter Dichtunsring 31 aufgenommen. Der über dem Unterdeckel 6 angeordnete Oberdeckel 7 besteht aus zwei identischen Halbdeckeln 7a und 7b. Diese liegen mit äußeren, ebenen Randabschnitten 8a und 8b auf der Oberseite des ebenen Randbereiches des Unterdeckels 6 auf. Die Halbdeckel 7a und 7b sind aus der in den Fig. 1 und 3 dargestellten Schließstellung in die in den Fig. 2 und 4 dargestellte Öffnungsstellung und umgekehrt verschiebbar. In der Schließstellung untergreifen die Halbdeckel 7a und 7b mit sichelförmig ausgebildeten Umbördelungen 10a und 10b den Topfrand 4 und pressen dadurch den Unterdeckel 6 gegen den Dichtungsring 31, so daß der Topfinnenraum 28 druckdicht abgeschlossen ist. Die Innenkanten 16a und 16b der Umbördelungen 10a und 10b verlaufen auf einem Kreis, dessen Radius mit dem Radius des

4

Kreises gleich ist, auf welchem die Außenkante 5 des Topfrandes 4 umläuft. Wie aus Fig. 3 ersichtlich untergreifen daher die Umbörderungen 10a und 10b in Schließstellung den Topfrand 4 praktisch über den Gesamtumfang von 360°. In Öffnungsstellung, in welchem die beiden Halbdeckel 7a und 7b gemäß den Fig. 2 und 4 auseinandergefahren sind, liegen die Innenkanten 16a und 16b gerade außerhalb der Außenkante 5 des Deckelrandes 4, so daß die Deckeleinheit 3 vom Untertopf 2 abgenommen werden kann. Die beiden Halbdeckel 7a und 7b sind jeweils auf einer zur vertikalen geometrischen Topfmittelachse M im wesentlichen parallelen Drehachse 11a und 11b drehbar und relativ zum Unterdeckel 6 und zum Untertopf verschieblich aufgenommen. Die Drehachsen 11a umd 11b sind als Bolzen ausgebildet und exzentrisch zur Topfmittelachse M und bezüglich dieser diametral einander gegenüberliegend in Bohrungen 27a und 27b eines mittig am Unterdeckel 6 drehbar gelagerten Drehteils aufgenommen. Die geometrischen Mittelachsen $D_a$ und $D_b$ der Drehachsen 11a und 11b liegen wie aus den Fig. 3 und 4 ersichtlich, sowohl in vollständiger Schließstellung, als auch — nach Drehung des Drehteiles 12 um 180° — in vollständiger Öffnungsstellung der Halbdeckel 7a und 7b in wesentlichen in derselben vertikalen Symmetrieebene S. Das Drehteil 12 ragt mit einem Gewindefortsatz 17 nach unten durch eine mittige Deckelöffnung 18 des Unterdeckels 6 mit geringem Spiel. Auf der Oberseite des Unterdeckels 6 stützt sich der Drehteil 12 mit einem Kragen 20 ab, der in dem Spalt 21 zwischen Unterdeckel und Oberdeckel 7 aufgenommen ist. Die Halbdeckel 7a und 7b liegen mit einem ebenen Mittelteil 22a und 22b auf der ebenen Oberseite des Kragens 20 auf. Auf den ins Topfinnere weisenden Gewindefortsatz 17 ist eine Gegenmutter 19 derart aufgeschraubt, daß der Drehteil 12 an dem Unterdeckel 6 sicher, aber drehbar gehalten ist. Auf die nach oben vorstehenden Enden der Drehachsen 11a und 11b ist ein Deckelgriff 23 aufgesetzt, der dadurch mit dem Drehteil 12 gegenüber dem Umterdeckel 12 verdrehbar ist. Der Deckelgriff 23 weist eine Vertiefung 29 für die Aufnahme eines Manometers oder Thermometers auf, der über die eine als Hohlachse ausgebildete Drehachse 11b mit dem Topfinnenraum 28 in Strömungsverbindung stehen kann. Die Halbdeckel 7a und 7b haben einander zugewandte Ränder 13a und 13b, die axial-symmetrisch zueinander jeweils von einer Seite ihres Außenumfangs aus unter Berücksichtigung der exzentrischen Lage der zugeordneten Drehachsen 11a und 11b, wie aus Fig. 3 ersichtlich, im wesentlichen radial verlaufen, und zwar etwa bis zur Symmetrieachse S, also der Höhe der Drehachsen 11a und 11b. Von da an umschließen sie eine konkave Einbuchtung 14a und 14b und dann eine die Drehachsen aufnehmende konvexe Zunge 15a und 15b. Zuletzt laufen sie wieder im wesentlichen radial zur diametral gegenüberliegenden Seite ihres Außenumfangs. Im Bereich der Zungen 15a und 15b ist, wie aus den Fig. 1 und 2 ersichtlich, daß Material der Halbdeckel 7a und 7b hülsenförmig verdickt. Aus den Figuren 1 und 2 ist auch ersichtlich, daß die Zungen 15a und 15b in Schließstellung der Halbdeckel 7a und 7b bezüglich ihres zugehörigen Halbdeckels 7a und 7b in der Symmetrieebene S jenseits der Topfmittelachse M liegen, während sie sich in Öffnungsstellung auf der gleichen Seite wie ihr zugeordneter Halbdeckel 7a bzw. 7b befinden. Durch die Drehung des Drehteiles 12 mit Hilfe des Deckelgriffes 23 wechseln die Drehachsen 11a und 11b also ihre Position in der Synmetrieebene S, so daß die Halbdeckel 7a und 7b aus der Schließstellung, in welcher die unteren Umbördelungen 10a und 10b den Topfrand 4 untergreifen, in die Öffnungsstellung gelangen, in welcher die Umbördelungen 10a und 10b den Topfrand 4 freigeben. Bei der Drehbewegung des Drehteiles 12 um 180° aus der Schließstellung in die Öffnungsstellung bewegen sich die Halbdeckel 7a und 7b entsprechend der exzentrischen Lagerung der Drehachsen 11a und 11b in einer Horizontalebene zunächst etwa in Richtung der radial verlaufenden Abschnitte ihrer einander zugewandten Ränder 13a und 13b auseinander, also etwa senkrecht zur Symmetrieebene S, um dann in eine Seitwärtsbewegung gemäß dem Verlauf der Symmetrieebene S überzugehen. Hierdurch läßt sich die Deckeleinheit 3 besonders einfach zum Topfrand 4 lösen. Beim Verschließen erfolgt der umgekehrte Bewegungsablauf. Damit die beiden Halbdeckel 7a und 7b jeweils eine definierte Bewegung ausführen, ist zwischen Unterdeckel 6 und Oberdeckel 7 ein Führungskörper 24 angeordnet, der den Kragen 20 des Drehteils 12 ringförmig umschließt und dadurch in seiner Drehbewegung an dem Kragen 20 geführt ist. Der Führungskörper 24 weist gemäß den Fig. 3 und 4 zwei zueinander axial-symmetrisch liegende Führungsnuten 25a und 25b auf, in welche die Halbdeckel 7a und 7b mit jeweiligen Führungsstiften 26a und 26b eingreifen. Die Führungsnuten 25a und 25b verlaufen im wesentlichen parallel zueinander und parallel zur Symmetrieebene 6. Sie gewährlei stet damit, daß die etwa radial verlaufenden Abschnitte der einander zugekehrten Ränder 13a und 13b während der Bewegung der Halbdeckel 7a und 7b im wesentlichen parallel zueinander bleiben. Damit der Dampfdruckkochtopf 1 nicht geöffnet werden kann, während sich im Topfinnenraum 28 noch ein Überdruck befindet, ist in dem Unterdeckel 6 (nur in Fig. 2 dargestellt) eine z. B. an sich bekannte Entlüftungs- und Druckentlastungseinrichtung 34 angeordnet die einen vertikal beweglichen Ventilkörper 35 aufweist, der am Anfang des Kochvorganges ein Entlüften des Topfinnenraumes 28 nicht zuläßt, dann angehoben wird und ein am unteren Ende des Ventilkörpers 25 angeordnetes Druckentlastungsventil in Funktion setzt. Solange im Topfinnenraum 28 Druck herrscht, ragt das obere Ende des Ventilkörpers 35 nach oben in eine Sicherungsöffnung 36 des einen Halbdeckels 7b. Da in Fig. 2 die Öffnungsstellung veranschaulicht ist, befindet sich die Sicherungsöffnung 36 nicht oberhalb des Ventilkörpers 35, wie dies in Schließstellung der Fall wäre, sondern radial nach außen verschoben. Ragt also der Ventilkörper 35 mit seinem oberen Ende in die Sicherungsöffnung 36 hinein, so ist ersichtlich, daß der gesamte Öffnungsmechanismus gesperrt ist, der Dampfdruckkochtopf also nicht geöffnet werden kann, solange er noch unter Druck steht.

5

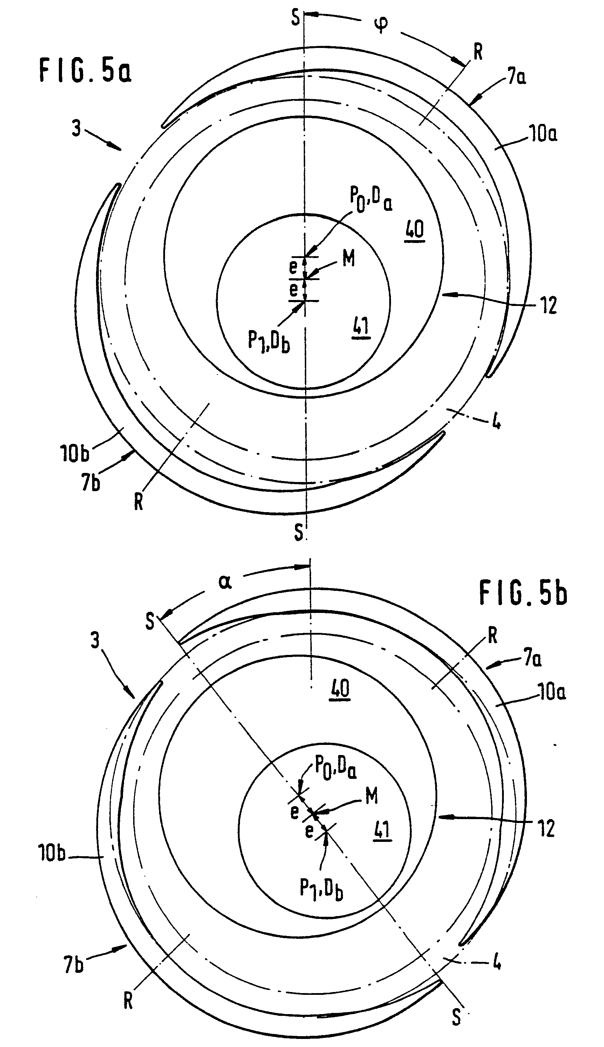

Bei der Ausführungsform gemäß den Fig. 5a bis 5c hat das um die Topfmittelachse M drehbar in dem Unterdeckel 6 gelagerte Drehteil 12 zwei Kreisscheibenabschnitte 40, 41, deren Mittelpunkte $P_0$ $P_1$ exzentrisch zur Topfmittelachse M auf einer Exzenterachse diametral einander gegenüberliegen. Jeder Kreisscheibenabschnitt 40, 41 ist in einer entsprechend kreisrunden Aussparung des zugeordneten Halbdeckels 7a, 7b aufgenommen so daß die Mittelpunkte $P_0$, $P_1$ die Drehachse $D_a$, $D_b$ bestimmen, um welche die Deckelhälften 7a, 7b bei ihrer Einwärts- und Auswärtsbewegung drehbar sind. Die Symmetrieebene S, in welcher die Drehachsen $D_a$, $D_b$ liegen ist gegenüber der vertikalen Mittelebene R, in deren Richtung sich die segmentförmigen Umbördelungen 10a, 10b im wesentlichen zusammen umd auseinander bewegen, um einen Winkel φ versetzt.

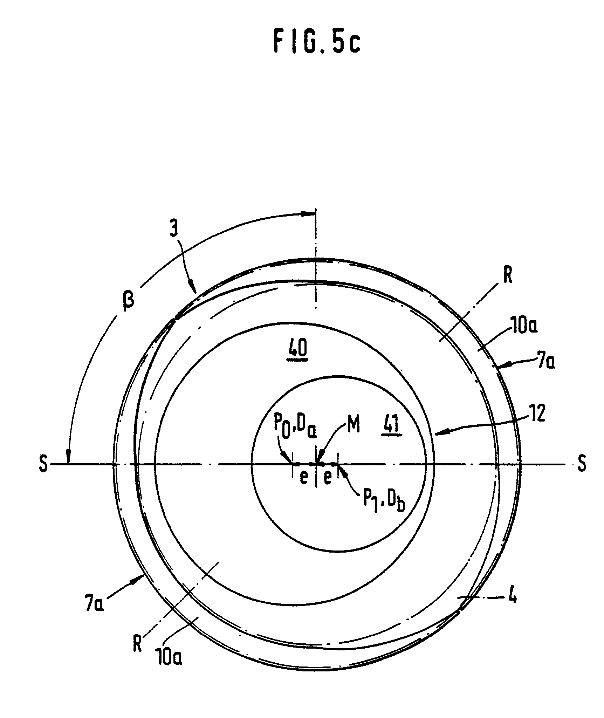

Fig. 5a zeigt die Deckeleinheit 3 in vollständiger Öffnungsstellung der Umbördelungen 10a, 10b unmittelbar nach dem Aufsetzen auf den Untertopf 2. Fig. 5b zeigt die Deckeleinheit 3 nach einer Drehung des Drehteiles 12 mit den exzentrisch liegenden Kreisscheibenabschnitten 40, 41 um einen Winkel α. Die Umbördelungen 10a, 10b sind entsprechend der durch die Exzentrizität e der Mittelpunkte $P_0$, $P_1$ bestimmten Bewegung geringfügig seitlich gegenüber der Mittelebene R und längs dieser radial nach innen verschoben. Fig. 5c zeigt die Deckeleinheit 3 nach einer Drehung des Drehteils 12 um einen Winkel β. Die Umbördelungen 10a, 10b liegen jetzt in ihrer Schließstellung, in welche sie den Topfrand 4 weitestgehend verriegelnd untergreifen.

Bezugszeichenliste

| | |
|---|---|
| 1 | Dampdruckkochtopf |
| 2 | Untertopf |
| 3 | Deckeleinheit |
| 4 | Topfrand |
| 5 | Außenkante |
| 6 | Unterdeckel |
| 7 | Oberdeckel |
| 7a, 7b | Halbdeckel |
| 8a, 8b | Randabschnitte |
| 9 | Randbereich |
| 10a, 10b | Umbördelungen |
| 11a, 11b | Drehachsen |
| 12 | Drehteil |
| 13a, 13b | Ränder |
| 14a, 14b | Einbuchtung |
| 15a, 15b | Zungen |
| 16a, 16b | Innenkanten |
| 17 | Gewindefortsatz |
| 18 | Deckelöffnung |
| 19 | Gegenmutter |
| 20 | Kragen |
| 21 | Spalt |
| 22a, 22b | Mittelteil |
| 23 | Deckelgriff |
| 24 | Führungskörper |
| 25a, 25b | Führungsnuten |
| 26a, 26b | Führungsstifte |
| 27a, 27b | Bohrungen |
| 28 | Topfinnenraum |
| 29 | Vertiefung |
| 30 | Umfangsnut |
| 31 | Dichtungsring |
| 32 | Wandung |
| 33 | Umfangsrille |
| 34 | Entlüftungs- und Druckentlastungseinrichtung |
| 35 | Ventilkörper |
| 36 | Sicherungsöffnung |
| 37 | Zarge |
| 38 | Schenkel |
| 39 | Schenkel |
| 40 | Kreisscheibenabschnitt |
| 41 | Kreisscheibenabschnitt |
| M | Topfmittelachse |
| $D_a$, $D_b$ | Mittenachsen |
| S | Symmetrieebene |

6

P₀, P₁            Mittelpunkte

**Patentansprüche**

1. Dampfdruckkochtopf, im wesentlichen bestehend aus einem Untertopf (2) und einer den Untertopf (2) mittels ringförmigem Schließelement druckdicht verschließenden Deckeleinheit (3), wobei der Untertopf (2) einen umlaufenden glatten, nach außen abgewinkelten Topfrand (4) mit in Draufsicht kontinuierlicher, vorzugsweise kreisrunder, Außenkante aufweist und wobei die Deckeleinheit einen Unterdeckel (6) und wenigstens ein einen in Schließstellung im wesentlichen geschlossenen Oberdeckel (7) bildendes Schließelement aufweist, das gegenüber dem Unterdeckel (6) und dem Untertopf (2) in einer Ebene parallel zur Ebene des Topfrandes (4) beweglich ist sowie einen oberen Randabschnitt (8a, 8b) für das Übergreifen eines äußeren Randbereiches (9) des Unterdeckels (6) und wengistens eine sich etwa über seinen halben Außenumfang erstreckende, für das Untergreifen des Topfrandes (4) in Verriegelungsstellung bestimmte untere Umbördelung (10a, 10b) aufweist, dadurch gekennzeichnet, daß der Oberdeckel (7) zwei Halbdeckel (7a, 7b) aufweist, daß jeder Halbdeckel (7a, 7b) um eine zur vertikalen geometrischen Topfmittelachse (M) im wesentlichen parallelen Drehachse (11a, 11b) relativ zum Unterdeckel (6) und zum Untertopf (2) drehbar aufgenommen ist, daß die Drehachsen (11a, 11b) exzentrisch zur Topfmittelachse (M) und bezüglich dieser diametral in einem mittig am Unterdeckel (6) drehbar gelagerten Drehteil (12) einander gegenüberliegen und daß jedem Halbdeckel (7a bzw. 7b) die von seinem Flächenschwerpunkt in Schließstellung weiter entfernt liegende Drehachse (11a bzw. 11b) zugeordnet ist.

2. Dampfdruckkochtopf nach Anspruch 1, dadurch gekennzeichnet, daß die beiden Halbdeckel (7a, 7b) im wesentlichen identisch sind und sich vorzugsweise in Schließstellung mit einander zugewandten Rändern (13a, 13b) aneinanderliegend zu einem vollen Oberdeckel (7) ergänzen.

3. Dampfdruckkochtopf nach Anspruch 1 oder 2, dadurch gekennzeichnet, daß die Drehachsen (11a, 11b) als gesonderte Bauteile drehbar in dem Drehteil (12) gelagert oder von dem Drehteil (12) gebildet sind.

4. Dampfdruckkochtopf nach Anspruch 3, dadurch gekennzeichnet, daß die einander zugewandten Ränder (13a, 13b) der Halbdeckel (7a, 7b) axialsymmetrisch zueinander jeweils von einer Seite ihres Außenumfangs aus unter Berücksichtigung der exzentrischen Lage der zugeordneten Drehachse (11a, 11b) im wesentlichen radial verlaufen, etwa von der Höhe der Drehachse (11a, 11b) an eine konkave Einbuchtung (14a, 14b) und dann eine die Drehachse (11a, 11b) aufnehmende konvexe Zunge (15a, 15b) umschließen und zuletzt wieder im wesentlichen radial zur diametral gegenüberliegenden Seite des Außenumfangs verlaufen.

5. Dampfdruckkochtopf nach Anspruch 4, dadurch gekennzeichnet daß Einbuchtung (14a, 14b) und Zunge (15a, 15b) beim Aneinanderliegen der im wesentlichen radial verlaufenden Abschnitte der einander zugewandten Ränder (13a, 13b) der Halbdeckel (7a, 7b) formschlüssig ineinandergreifen.

6. Dampfdruckkochtopf nach Anspruch 1 oder 2, dadurch gekennzeichnet, daß der Drehteil (12) zwei exzentrisch zur Topfmittelachse (M) liegende Kreisscheibenabschnitte (40, 41) aufweist, deren Mittelpunkte (P₀, P₁) die Lage der geometrischen Mittelachsen (Dₐ, D_b) der Drehachsen (11a, 11b) bestimmen und daß jeder Kreisscheibenabschnitt (40, 41) in einer entsprechend kreisrunden Aussparung des ihm zugeordneten Halbdeckels (7a, 7b) drehbar aufgenommen ist.

7. Dampfdruckkochtopf nach einem der Ansprüche 1 bis 6, dadurch gekennzeichnet, daß die geometrischen Mittelachsen (Dₐ, D_b) der Drehachsen (11a, 11b) sowohl in vollständiger Schließstellung als auch in vollständiger Öffnungsstellung der Halbdeckel (7a, 7b) im wesentlichen in derselben vertikalen Symmetrieebene (S) liegen.

8. Dampfdruckkochtopf nach einem der Ansprüche 1 bis 7, dadurch gekennzeichnet, daß sich die unteren Umbördelungen (10a, 10b) der Halbdeckel (7a, 7b), vorzugsweise von der die geometrischen Mittelachsen (Dₐ, D_b) der Drehachsen (11a, 11b) aufnehmenden Symmetrieebene (S) aus, in ihrer Breite zu den einander zugewandten Rändern (13a, 13b) der Halbdeckel (7a, 7b) allmählich verringern.

9. Dampfdruckkochtopf nach einem der Amsprüche 1 bis 8, dadurch gekennzeichnet, daß der Verlauf der Innenkanten (16a, 16b) der unteren Umbördelungen (10a, 10b) der Halbdeckel (7a, 7b) der Kontur des zugeordneten Bereichs der Außenkante (5) des Topfrandes (4) entspricht.

10. Dampfdruckkochtopf nach Anspruch 5, mit außen kreisrundem Topfrand dadurch gekennzeichnet, daß die Innenkanten (16a, 16b) der unteren Umbördelungen (10a, 10b) der Halbdeckel (7a, 7b) auf einem Kreis verlaufen, dessen Radius dem Radius des Kreises entspricht, auf welchem die Außenkante (5) des Topfrandes (4) verläuft.

11. Dampfdruckkochtopf nach einem der Ansprüche 1 bis 10, dadurch gekennzeichmet, daß das Drehteil (12) mittels eines Gewindefortsatzes (17) durch eine mittige Deckelöffnung (18) des Unterdeckels (6) mit geringem Spiel drehbar hindurchragt und mittels einer auf den Gewindefortsatz (17) aufgeschraubten Gegenmutter (19) drehbar am dem Unterdeckel (6) gehalten ist.

12. Dampfdruckkochtopf nach Anspruch 11, dadurch gekennzeichnet, daß der Gewindefortsatz (17) und/oder die Deckelöffnung (18) kreisrunden Querschnitt haben.

13. Dampfdruckkochtopf nach Anspruch 11 oder 12, dadurch gekennzeichnet, daß der Drehteil (12) mit dem Gewindefortsatz (17) auf der Innenseite des Unterdeckels (6) hervorragt.

14. Dampfdruckkochtopf nach einem der Ansprüche 1 bis 13, dadurch gekennzeichnet, daß der Drehteil (12) sich mit einem zwischem Unterdeckel (6) und Halbdeckeln (7a, 7b) liegenden erweiterten Kragen (20) auf der Oberseite des Unterdeckels (6) abstützt.

15. Dampdruckkochtopf nach Anspruch 14, dadurch gekennzeichnet, daß die Höhe des Kragens (20) der Breite des Spaltes (21) zwischen Unterdeckel (6) und Halbdeckeln (7a, 7b) entspricht.

16. Dampfdruckkochtopf nach Anspruch 14 oder 15, dadurch gekennzeichnet daß sich die Halbdeckel (7a, 7b) mit einem ebenen Mittelteil (22a, 22b) auf einer ebenen Oberseite des Kragens (20) abstützen.

17. Dampfdruckkochtopf nach einem der Ansprüche 1 bis 16, dadurch gekennzeichnet daß der Drehteil (12) mit einem oberhalb der Halbdeckel (7a, 7b) liegenden Deckelgriff (23) drehfest verbunden ist.

18. Dampfdruckkochtopf nach einem der Ansprüche 1 bis 17, dadurch gekennzeichnet, daß zwischen Unterdeckel (6) und den Halbdeckeln (7a, 7b) ein Führungskörper (24) mit zwei axialsymmetrisch liegenden Führungsnuten (25a, 25b) angeordnet ist, in welche die Halbdeckel (7a, 7b) mit je einem Führungsstift (26a, 26b) eingreifen.

19. Dampfdruckkochtopf nach Anspruch 18, dadurch gekennzeichnet, daß die Führungsnuten (25a, 25b) im wesentlichen gerade, zueinander und zur Symmetrieebene (S) parallel verlaufen, in welcher die geometrischen Mittelachsen ($D_a$, $D_b$) der Drehachsen (11a, 11b) in der Schließstellung liegen, und daß der Führungskörper (24) um die Topfmittelachse (M) drehbar angeordnet ist.

20. Dampfdruckkochtopf nach Anspruch 18 oder 19 dadurch gekennzeichnet, daß der Führungskörper (24) den Drehteil (12) ringförmig umschließt.

21. Dampfdruckkochtopf nach einem der Ansprüche 18 bis 20, dadurch gekennzeichnet daß die Höhe des Führungskörpers (24) etwa der Breite des Spaltes (21) zwischen Unterdeckel (6) und Halbdeckeln (7a, 7b) entspricht.

22. Dampfdruckkochtopf nach einem der Ansprüche 3 bis 21 dadurch gekennzeichnet, daß die Drehachsen (11a, 11b) als in Bohrungen (27a, 27b) des Drehteils (12) aufgenommene Bolzen ausgebildet sind.

23. Dampfdruckkochtopf nach einem der Ansprüche 1 bis 22, dadurch gekennzeichnet, daß wenigstens eine der beiden Drehachsen (11a, 11b) als Hohlachse ausgebildet ist, welche eine Strömungsverbindung zwischen dem Topfinnenraum (28) und einem in dem Deckelgriff (23) angeordneten Manometer und/oder Thermometer herstellt.

24. Dampfdruckkochtopf nach Anspruch 23, dadurch gekennzeichnet, daß der Deckelgriff (23) eine Vertiefung (29) für die Aufnahme eines Manometers und/oder Thermometers aufweist.

25. Dampfdruckkochtopf nach einem der Ansprüche 1 bis 24, dadurch gekennzeichnet, daß der Unterdeckel (6) als Zargendeckel ausgebildet ist und im Bereich der Deckelauflage eine Umfangsnut (30) für die Aufnahme eines Dichtungsringes (31) hat.

26. Dampfdruckkochtopf nach Anspruch 25, dadurch gekennzeichnet, daß der Untertopf (6) im Übergangsbereich zwischen Wandung (32) und auskragendem Topfrand (4) eine Umfangsrille (33) für das Eingreifen des in der Umfangsnut (30) des Unterdeckels (6) liegenden Dichtungsringes (31) aufweist.

27. Dampfdruckkochtopf nach einem der Ansprüche 1 bis 26, dadurch gekennzeichnet, daß in dem Unterdeckel (6) eine Entlüftungs- und Druckentlastungseinrichtung (34) angeordnet ist, deren vertikal beweglicher Ventilkörper (35) bei in dem geschlossenen Topfinnenraum (28) herrschendem Überdruck durch eine in der zugeordneten Deckelhälfte (7a, 7b) angeordnete Sicherungsöffnung (36) ragt, deren Querschnitt nur geringfügig größer als der Außenquerschnitt des Ventilkörpers (35) ist.

## Claims

1. A steam pressure cooker substantially consisting of a lower pot (2) and a cover unit (3) pressure-sealing said lower pot (2) by means of a ring-shaped sealing element, in which said lower pot (2) has a circumferential smooth pot rim (4) angled toward the outside, which pot rim, from a top plan view, has a continuous, preferably circular outer edge and said cover unit has a lower lid (6) and at least one sealing element forming an upper lid (7) substantially sealed in the locking position, which sealing element relative to the lower lid (6) and the lower pot (2) is movable in a plane parallel to the plane of the pot rim (4) and comprises an upper rim section (8a, 8b) for engaging over an outer rim area (9) of the lower lid (6) and at least one lower flange (10a, 10b) extending across half the outer circumference thereof and intended for engaging under the pot rim (4) in the locking position, characterized in that the upper lid (7) comprises two half lids (7a, 7b), that each half lid (7a, 7b) is rotatably received about an axis of rotation (11a, 11b) substantially parallel to the vertical geometrical pot center axis (M) relative to the lower lid (6) and the upper pot (2), that the swivel axes (11a, 11b) are disposed eccentrically to said central axis (M) of the pot and relative to the latter diametrically opposite each other in a swivel mechanism (12) rotatably disposed in the middle of the lower lid (6), and that the swivel axis (11a and 11b, respectively) more remote, in the closed position, from the center of gravity of the area of each half lid (7a and 7b, respectively) is associated to each half lid (7a and 7b, respectively).

2. A steam pressure cooker according to claim 1, characterized in that both half-lids (7a, 7b) are substantially identical and, preferably, in the closed position, form a complete upper lid (7) by the interengaging rims (13a, 13b) facing one another.

3. A steam pressure cooker according to claims 1 or 2, characterized in that the swivel axes (11a, 11b) designed as separate components are rotatably disposed in the swivel mechanism (12) or are formed by the said swivel mechanism (12).

4. A steam pressure cooker according to claim 3, characterized in that the edges (13a, 13b) of the half-lids (7a, 7b) facing one another, respectively from one side of their outer perimeter, under consideration of the eccentric position of the associated swivel axis (11a, 11b) extend substantially radially, from about the height of the swivel axis (11a, 11b) enclose a concave indentation (14a, 14b) and then a convex tongue (15a, 15b) receiving the swivel axis (11a, 11b) after which they extend again substantially radially to the diametrically opposite side of the outer perimeter.

5. A steam pressure cooker according to claim 4, characterized in that indentation (14a, 14b) and tongue (15a, 15b) engage in form-locking manner once the substantially radially extending sections of the edges (13a, 13b) facing one another, of the half-lids (7a, 7b) interengage.

6. A steam pressure cooker according to claims 1 or 2, characterized in that the swivel mechanism (12) contains two circular washer sections (40, 41) disposed eccentrically to the central axis (M) of the pot, in which the mid-points ($P_0$, $P_1$) of the washer sections define the position of the geometrical central axis ($D_a$, $D_b$) of the swivel axes (11a, 11b), and that each circular washer section (40, 41) is pivotally disposed in a corresponding circular recess of the associated half-lid (7a, 7b).

7. A steam pressure cooker according to any one of the preceding claims 1 to 6, characterized in that the geometrical central axes ($D_a$, $D_b$) of the swivel axes (11a, 11b) lie in substantially the same vertical symmetry plane (S) both in the fully closed and in the fully opened position of the half-lids (7a, 7b).

8. A steam pressure cooker according to any one of the preceding claims 1 to 7, characterized in that the lower flanges (10a, 10b) of the half-lids (7a, 7b) gradually taper in width preferably from the plane of symmetry (S) receiving the geometrical central axes ($D_a$, $D_b$) of the swivel axes (11a, 11b) toward the edges (13a, 13b) facing one another, of the half-lids (7a, 7b).

9. A steam pressure cooker according to any one of the preceding claims 1 to 8, characterized in that the contour of the inner edges (16a, 16b) of the lower flanges (10a, 10b) of the half-lids (7a, 7b) corresponds to the contour of the associated area of the outer edge (5) of the pot rim (4).

10. A steam pressure cooker according to claim 9, comprising a pot rim which, externally, is of circular configuration, characterized in that the inner edges (16a, 16b) of the lower flanges (10a, 10b) of the half-lids (7a, 7b) are circular having a radius corresponding to the radius of the circle upon which the outer edge (5) of the pot rim (4) runs.

11. A steam pressure cooker according to any one of claims 1 to 10, characterized in that the swivel mechanism (12) rotatably projects, with little play, through a central lid opening (18) of the lower lid (6) by means of a screw thread means (17), and is rotatably held on the lower lid (6) by means of a counter-nut (19) screwed upon the screw thread means (17).

12. A steam pressure cooker according to claim 11, characterized in that the screw thread means (17) and/or the lid opening (18) are of a circular cross-section.

13. A steam pressure cooker according to claims 11 or 12, characterized in that the swivel mechanism (12) projects with the screw thread means (17) from the inner side of the lower lid (6).

14. A steam pressure cooker according to any one of claims 1 to 13, characterized in that the swivel mechanism (12) is supported on the upper face of the lower lid (6) with a widened collar (20) provided between lower lid (6) and half-lids (7a, 7b).

15. A steam pressure cooker according to claim 14, characterized in that the height of the collar (20) corresponds to the width of the gap (21) between lower lid (6) and half-lids (7a, 7b).

16. A steam pressure cooker according to claims 14 or 15, characterized in that the half-lids (7a, 7b), with a flat middle section (22a, 22b) are supported on a planar upper face of the collar (20).

17. A steam pressure cooker according to any one of claims 1 to 16, characterized in that the swivel mechanism (12) is rigidly connected to a lid handle (23) disposed above the half-lids (7a, 7b).

18. A steam pressure cooker according to any one of claims 1 to 17, characterized in that a guide piece (24) is positioned between lower lid (6) and half lids (7a, 7b), with the guide piece having two axialsymmetrically disposed guide grooves (25a, 25b) engaged by the half-lids (7a, 7b) by one guide pin (26a, 26b) each.

19. A steam pressure cooker according to claim 18, characterized in that the guide grooves (25a, 25b) are essentially straight and extend in parallel to each other and to the plane of symmetry (S) in which lie the geometrical central axes ($D_a$, $D_b$) of the swivel axes (11a, 11b) in the closed position, and that the guide piece (24) is rotatably disposed about the central axis (M) of the pot.

20. A steam pressure cooker according to claims 18 or 19, characterized in that the guide piece (24) surrounds the swivel mechanism (12) in ring-type manner.

21. A steam pressure cooker according to any one of claims 18 to 20, characterized in that the height of the guide piece (24) substantially corresponds to the width of the gap (21) between lower lid (6) and half lids (7a, 7b).

22. A steam pressure cooker according to any one of claims 3 to 21, characterized in that the swivel axes (11a, 11b) are formed as pins received in boreholes (27a, 27b) of the swivel mechanism (12).

23. A steam pressure cooker according to any one of claims 1 to 22, characterized in that at least one of the two swivel axes (11a, 11b) has a channel defined therein to provide a flow connection between the pot interior (28) and a manometer and/or thermometer provided in the lid handle (23).

24. A steam pressure cooker according to claim 23, characterized in that the lid handle (23) includes a recess (29) for housing the manometer and/or theremometer.

25. A steam pressure cooker according to any one of claims 1 to 24, characterized in that the lower lid (6) is formed as a frame lid and, in the area of the lid seat, includes a circumferential groove (30) for accommodating a gasket (31).

26. A steam pressure cooker according to claim 25, characterized in that the lower pot (6), in the transition zone between the wall (32) and the flanged pot rim (4), contains a circumferential groove (33) to engage the gasket (31) disposed in the circumferential groove (30) of the lower lid (6).

27. A steam pressure cooker according to any one of claims 1 to 26, characterized in that disposed in the lower lid (6) is an air vent and a pressure relieving means (34), the vertically movable valve body (35) of which at the excess pressure prevailing in the closed pot interior (28), protrudes through a safety opening (36) provided in the associated lid-half (7a, 7b), with the cross-section of such safety opening being just barely larger than the outer cross-section of the valve body (35).

## Revendications

1. Marmite à pression essentiellement composée d'une marmite inférieure (2) et d'un ensemble de couvercle (3) étanche fermant la marmite inférieure (2) par l'intermédiaire d'un élément de fermeture, la marmite inférieure (2) comportant un bord (4) de marmite circonférentiellement plan et extérieurement plié et comportant, en vue plane, une face extérieure continue, préférablement circulaire, et l'ensemble de couvercle comportant un couvercle inférieur (6) et au moins un élément de fermeture formant un couvercle supérieur (7) essentiellement fermé dans la position de fermeture, l'élément de fermeture étant mobile vis-à-vis du couvercle inférieur (6) et la marmite inférieure (2) dans le plan parallèle au plan de bord (4) de marmite et comportant une section de face supérieure (8a, 8b) pour mettre en engrènement sur une région de bord (9) extérieur du couvercle inférieur (6) et comportant au moins une bride (10a, 10b) inférieure s'étendant à peu près le long du demi-périmètre extérieur destinée à la mise d'engrènement sous le bord (4) de marmite dans la position de fermeture, caractérisée en ce que le couvercle supérieur (7) comporte deux demi-couvercles (7a, 7b), que chaque demi-couvercle (7a, 7b) est disposé rotativement autour d'un axe de révolution (11a, 11b) essentiellement parallèle à l'axe (M) central de marmite vertical et géométrique relatif au couvercle inférieur (6) et à la marmite inférieure (2), que les axes de révolution (11a, 11b) se font face excentriquement à l'axe central (M) de marmite et relatif au dernier diamétralement dans une partie tournante (12) disposée de manière pivotante centriquement sur le couvercle inférieur (6), et que l'axe de révolution (11a respectivement 11b) disposé plus loin de son centre de gravité de surface dans la position de fermeture est associé à chaque demi-couvercle (7a respectivement 7b).

2. Marmite à pression selon la revendication 1, caractérisée en ce que les deux demi-couvercles (7a, 7b) sont essentiellement identiques et, préférablement dans la position de fermeture, avec des bords (13a, 13b) opposés forment, en position contiguë, un couvercle supérieur (7) complet.

3. Marmite à pression selon les revendications 1 ou 2, caractérisée en ce que les axes de rotation (11a, 11b) comme components séparés sont disposés de manière pivotante dans la partie tournante (12), ou sont formés par ladite partie tournante (12).

4. Marmite à pression selon la revendication 3, caractérisée en ce que les bords (13a, 13b) opposés des demi-couvercles (7a, 7b) s'étendent essentiellement radiale de manière axial-symétrique l'un à l'autre chaque fois d'un côté de leur périmètre extérieur compte tenu de la position excentrique de l'axe de rotation (11a, 11b) associé ; entourent dès le niveau de l'axe de rotation (11a, 11b) une indentation (14a, 14b) concave et après une langue (15a, 15b) convexe recueillant l'axe de rotation (11a, 11b) et dernièrement s'étendent encore de manière essentiellement radiale vers le côté du périmètre extérieur diamétralement opposé.

5. Marmite à pression selon la revendication 4, caractérisée en ce que l'indentation (14a, 14b) et la langue (15a, 15b) en position contiguë des sections s'étendent de manière essentiellement radiale des bords (13a, 13b) des demi-couvercles (7a, 7b) et s'engrènent de manière commandée mécaniquement.

6. Marmite à pression selon les revendications 1 ou 2, caractérisée en ce que la partie tournante (12) comporte deux rondelles circulaires (40, 41) disposées excentriquement à l'axe central (M) de marmite, les centres desquelles ($P_0$, $P_1$) définissent la position des axes centraux géométriques ($D_a$, $D_b$) des axes de révolution (11a, 11b), et que chaque rondelle circulaire (40, 41) est disposée de manière pivotante dans un évidement sous forme circulaire correspondante du demi-couvercle (7a, 7b) associé à celle-ci.

7. Marmite à pression selon l'une des revendications 1 à 6, caractérisée en ce que les axes centraux ($D_a$, $D_b$) géométriques des axes de révolution (11a, 11b) non seulement dans la position de fermeture complète mais encore dans la position d'ouverture complète des demi-couvercles (7a, 7b) sont disposés dans pratiquement le même plan de symétrie (S) vertical.

8. Marmite à pression selon l'une des revendications 1 à 7, caractérisée en ce que les brides (10a, 10b) inférieures des demi-couvercles (7a, 7b), préférablement dès le plan de symétrie (S) recevant les axes

centraux ($D_a$, $D_b$) géométriques des axes de révolution (11a, 11b), se diminuent par degrés en largeur vers les bords (13a, 13b) faisant face aux demi-couvercles (7a, 7b).

9. Marmite à pression selon l'une des revendications 1 à 8, caractérisée en ce que l'allure des surfaces intérieures (16a, 16b) des brides (10a, 10b) inférieures des demi-couvercles (7a, 7b) corresponde au contour de la région associée de la surface extérieure (5) du bord de marmite (4).

10. Marmite à pression selon la revendication 9, ayant un bord de marmite sous forme circulaire à l'extérieur, caractérisée en ce que les surfaces intérieures (16a, 16b) des brides (10a, 10b) inférieures des demi-couvercles (7a, 7b) s'étendent sur un cercle le rayon duquel corresponde au rayon du cercle sur lequel s'étend la surface extérieure (5) du bord de marmite (4).

11. Marmite de pression selon l'une des revendications 1 à 10, caractérisée en ce que la partie tournante (12), par l'intermédiaire d'un moyen à fileter (17), se projette à travers une ouverture de couvercle (18) centrique du couvercle (6) inférieur de manière pivotante avec peu de jeu et, par l'intermédiaire d'un contre-écrou (19) vissé sur le moyen à fileter (17), est maintenue de manière pivotante sur le couvercle (6) inférieur.

12. Marmite à pression selon la revendication 11, caractérisée en ce que le moyen à fileter (17) et/ou l'ouverture de couvercle (18) sont de section circulaire.

13. Marmite de pression selon les revendications 11 ou 12, caractérisée en ce que la partie tournante (12) se projette avec le moyen à fileter (17) sur le côté intérieur du couvercle inférieur (6).

14. Marmite à pression selon l'une des revendications 1 à 13, caractérisée en ce que la partie tournante (12) s'appuie sur le côté supérieur du couvercle inférieur (6) avec un collet élargi (20) disposé entre couvercle (6) inférieur et demi-couvercles (7a, 7b).

15. Marmite à pression selon la revendication 14, caractérisée en ce que la hauteur du collet (20) corresponde à la largeur de la fente (21) entre couvercle (6) inférieur et demi-couvercles (7a, 7b).

16. Marmite à pression selon les revendications 14 ou 15, caractérisée en ce que les demi-couvercles (7a, 7b) s'appuient sur une surface plane du collet (20) avec une partie centrale plane (22a, 22b).

17. Marmite à pression selon l'une des revendications 1 à 16, caractérisée en ce que la partie tournante (12) est fermement reliée à une poignée (23) de couvercle disposée au-dessus des demi-couvercles (7a, 7b).

18. Marmite à pression selon l'une des revendications 1 à 17, caractérisée en ce qu'un élément de guidage (24) pourvu de deux rainures de guidage (25a, 25b) de position axial-symétrique est disposé entre couvercle (6) inférieur et demi-couvercles (7a, 7b), lesquelles rainures sont attaquées par les demi-couvercles (7a, 7b) à la fois par une cheville de guidage (26a, 26b).

19. Marmite à pression selon la revendication 18, caractérisée en ce que les rainures de guidage (25a, 25b) s'étendent de manière droite et parallèle l'une à l'autre et au plan de symétrie (S) dans lequel sont disposés les axes centraux ($D_a$, $D_b$) géométriques des axes de révolution (11a, 11b) dans la position de fermeture, et que l'élément de guidage (24) est disposé de manière pivotante autour de l'axe central de marmite (M).

20. Marmite à pression selon les revendications 18 ou 19, caractérisée en ce que l'élément de guidage (24) entoure la partie tournante (12) de manière circulaire.

21. Marmite à pression selon l'une des revendications 18 à 20, caractérisée en ce que la hauteur de l'élément de guidage (24) corresponde à peu près à la largeur de la fente (21) entre couvercle inférieur (6) et demi-couvercles (7a, 7b).

22. Marmite à pression selon l'une des revendications 3 à 21, caractérisée en ce que les axes de révolution (11a, 11b) sont sous forme de boulons recueillis dans les alésages (27a, 27b) de la partie tournante (12).

23. Marmite à pression selon l'une des revendications 1 à 22, caractérisée en ce qu'au moins l'un des deux axes de révolution (11a, 11b) est sous forme de l'essieu creux formant une jonction de flux entre l'intérieur (28) de marmite et un manomètre et/ou thermomètre disposés dans la poignée (23) de couvercle.

24. Marmite selon la revendication 23, caractérisée en ce que la poignée de couvercle (23) comporte une cavité (29) pour loger un manomètre et/ou thermomètre.

25. Marmite de pression selon l'une des revendications 1 à 24, caractérisée en ce que le couvercle (6) inférieur est sous forme de couvercle de châssis et comporte dans la région d'assemblage de couvercle une rainure circonférentielle (30) pour loger un anneau de joint (31).

26. Marmite à pression selon la revendication 25, caractérisée en ce que la marmite (6) inférieure dans la zone de transition entre la paroi (32) et le bord de marmite (4) saillant comporte une rainure circonférentielle (33) pour l'engrènement de l'anneau de joint (31) disposé dans la rainure circonférentielle (30) du couvercle (6) inférieur.

27. Marmite à pression selon l'une des revendications 1 à 26, caractérisée en ce qu'un mécanisme d'évacuation et de détention (34) est prévu dans le couvercle (6) inférieur, le corps de soupape (35) duquel verticalement mobile, à la surpression règnant dans l'intérieur de marmite fermée se projette à travers une ouverture de sûreté (36) disposée en la moitié de couvercle (7a, 7b) associée, la section de l'ouverture de sûreté étant seulement un peu plus large que la section extérieure du corps de soupape (35).

FIG.1

FIG.2

FIG.3

FIG.4

FIG.5a

FIG.5b

# FIG.5c